# EUROPÄISCHE PATENTANMELDUNG

(11) **EP 1 691 308 A1**
(43) Veröffentlichungstag der Anmeldung: **16.08.2006**
(21) Anmeldenummer: 05003112.9
(22) Anmeldetag: 14.02.2005
(51) Int. Cl.: G06F 17/30, G06Q 30/00

(54) **Verfahren und Vorrichtung zur kundenspezifischen Erstellung von Einträgen in einem Telefonbuch od. dgl.**

(71) Anmelder: Müller Marken GmbH & Co. Betriebs-KG, 90425 Nürnberg (DE)
(72) Erfinder: Oschmann, Michael, 90491 Nürnberg (DE)
(74) Vertreter: Tergau & Pohl Patentanwälte

(57) **Zusammenfassung**

Es werden ein rationelles, flexibles, fehlersicheres und kundenfreundliches Verfahren zur kundenspezifischen Erstellung von Einträgen in einem Telefonbuch o.dgl. sowie eine zugehörige Einrichtung (1) angegeben. Dabei ist vorgesehen, mindestens einen Kundendatertsatz (K) von einer zentralen Stammdatenbank (7) auf ein mobiles Präsentationssystem (4) zu übertragen, unter Berücksichtigung des Kundendatensatzes (K) anhand von hinterlegten Eintragsvorlagen (V,Vₙ; n = 1,2,...) eine Anzahl von vorkonfigurierten Eintragsprototypen (E,Eₙ) zu erzeugen und auf dem Präsentationssystem (4) zur Auswahl anzuzeigen, wobei durch das Präsentationssystem (4) bei Auswahl eines Eintragsprototyps (E,Eₙ) ein entsprechender Auftrag (A) zur Realisierung des Eintrags in dem Telefonbuch o.dgl. erzeugt wird.

## Beschreibung

Die Erfindung bezieht sich auf ein Verfahren zur kundenspezifischen Erstellung von Einträgen in einem Telefonbuch o.dgl. Die Erfindung bezieht sich des Weiteren auf eine Vorrichtung zur Durchführung des genannten Verfahrens. Als "Telefonbuch o.dgl." werden neben tatsächlichen Telefonbüchern auch sonstige Sammlungen, Verzeichnisse und Nachschlagewerke von Adressen, Annoncen und/oder Anzeigen verstanden, in denen personen- oder untemehmensbezogene Informationen, insbesondere Adressangaben, Branchenangaben, Öffnungszeiten etc., gemäß einer vorgegebenen Datenstruktur aufgenommen sind.

Im Rahmen eines Telefonbuches ist gewerblichen Netzteilnehmern üblicherweise die Möglichkeit gegeben, zugehörige Telefonbucheinträge durch besondere Gestaltungsmaßnahmen gegenüber einem Standard-Telefonbucheintrag werbewirksam hervorzuheben. Solche Gestaltungsmaßnahmen umfassen insbesondere die Verwendung einer gegenüber dem Standardtext des Telefonbuchs modifizierten Schriftart oder -größe, die Verwendung graphischer Elemente, die Aufnahme zusätzlicher Information, wie z.B. Öffnungszeiten, oder die Möglichkeit zur Realisierung einer frei gestaltbaren Werbe-Annonce auf einem vorgegebenen Flächenbereich des Telefonbuchs. Derartige gewerbliche Telefonbucheinträge werden häufig im Auftrag eines mit der Realisierung des Telefonbuchs befassten Verlagshauses durch eine Vielzahl von im Außendienst arbeitenden Medienberatern vermittelt.

Die auf einer solchen Vermittlungstätigkeit beruhende Erstellung von Telefonbucheinträgen ist aufgrund der erforderlichen Abstimmung zwischen einer hohen Anzahl von Beteiligten, nämlich dem Verlagshaus, den Medienberatern und den Kunden hochkomplex und entsprechend arbeitsaufwändig. Zu berücksichtigen ist hierbei insbesondere, dass ein Abstimmungsfehler, der zu einem fehlerhaften Telefonbucheintrag führen würde, aufgrund der vergleichsweise langen Gültigkeitsdauer und der hohen Verbreitung eines Telefonbuchs ein erhebliches Schadenspotential birgt und somit unter allen Umständen zu vermeiden ist. Unter dem Begriff "Kunden" werden hierbei allgemein gewerbliche Netzteilnehmer verstanden, die bereits Auftraggeber für die oben beschriebenen Telefonbucheinträge sind oder als potentielle Auftraggeber in Frage kommen.

Ein spezielles Problem bei der Erstellung von Telefonbucheinträgen besteht darin, dass das Vermittlungsresultat, d.h. das Aussehen und die Wirkung des zu realisierenden Telefonbucheintrags, mit vertretbarem Arbeitsaufwand für den Medienberater dem Kunden vorab nur in begrenztem Maße veranschaulicht werden kann. Eine Veranschaulichung des Vermittlungsergebnisses erfolgt in der Regel anhand einer begrenzten Anzahl vorgefertigter Mustereinträge. Die Vielzahl der individuellen Ausgestaltungsoptionen des zu realisierenden Telefonbucheintrags können seitens des Medienberaters bisher im Allgemeinen jedoch nur abstrakt beschrieben werden. Dies verkompüziert häufig eine kundenspezifische Optimierung des zu erstellenden Telefonbucheintrags.

Der Erfindung liegt die Aufgabe zugrunde, ein Verfahren anzugeben, das im Rahmen einer solchen Vermittlungstätigkeit eine besonders rationelle, flexible, fehlersichere und kundenfreundliche Erstellung von Einträgen in einem Telefonbuch od. dgl. ermöglicht. Der Erfindung liegt weiterhin die Aufgabe zugrunde, eine Einrichtung anzugeben, die die Durchführung des oben genannten Verfahrens arbeitendes System effektiv unterstützt.

Bezüglich des Verfahrens wird die Aufgabe erfindungsgemäß gelöst durch die Merkmale des Anspruchs 1. Bezüglich der zugehörigen Vorrichtung wird die Aufgabe erfindungsgemäß gelöst durch die Merkmale des Anspruchs 12.

Erfindungsgemäß ist vorgesehen, anhand eines aus einer zentralen Stammdatenbank zur Verfügung gestellten Kundendatensatzes und anhand von hinterlegten Eintragsvorlagen automatisch eine Anzahl von Eintragsprototypen, d.h. verschiedene bereits kundenspezifisch vorkonfigurierte Voransichten eines möglichen Telefonbucheintrags o.dgl. zu generieren und diese Eintragsprototypen auf einem insbesondere als Notebook oder Tablet-PC ausgebildeten mobilen Präsentationssystem dem zugehörigen Kunden zur Auswahl anzuzeigen. Der Kundendatensatz wird hierzu bevorzugt als Rohdatensatz von der zentralen Stammdatenbank auf das mobile Präsentationssystem übertragen, so dass die komplette Bearbeitung der Kundendaten, insbesondere die Generierung der Eintragsprototypen, lokal auf dem Präsentationssystem stattfindet. Äquivalenterweise können die Kundendaten aber auch bereits zentral vorverarbeitet und in dieser Form auf das Präsentationssystem übertragen werden. In dem mobilen Präsentationssystem wird dabei bevorzugt durch ein Kostenberechnungsmodul anhand einer hinterlegten Kostentabelle zu jedem Eintragsprototyp eine zugehörige Preisangabe berechnet, die als Zusatzinformation für die Auswahl auf dem Präsentationssystem angezeigt wird.

Die Auswahl erfolgt nach einem elektronischen Warenkorb-Prinzip. Hierbei wird durch ein Auswahlmodul des mobilen Präsentationssystems hinsichtlich eines kundenspezifisch ausgewählten Eintragsprototyps ein Angebot erzeugt und angezeigt, welches von dem Kunden angenommen werden kann. Bei Annahme wird ein entsprechender Auftrag erzeugt, der zur Realisierung des Eintrags in dem Telefonbuch o.dgl. an eine Verlagszentrale rückgemeldet wird. Zur Auftragsvergabe ist insbesondere eine Bestätigung des Kunden durch Abgabe einer elektronischen Unterschrift vorgesehen. Die Auftragsvergabe kann äquivalenterweise aber auch papierbasiert erfolgen.

Durch das erfindungsgemäße Verfahren und die zugehörige Vorrichtung wird die Erstellung von Telefonbucheinträgen o.dgl. in entscheidendem Maße sowohl flexibilisiert als auch rationalisiert. Dabei wird gleichzeitig ein besonders hoher Kundenkomfort erzielt. Insbesondere hat der Kunde durch die automatische Generierung der Eintragsprototypen und deren Anzeige auf dem mobilen Präsentationssystem die Möglichkeit, den Eintrag bereits vor der zu treffenden Kaufentscheidung in einer Form zu begutachten, die der endgültigen Realisierung entspricht oder zumindest sehr nahe kommt. Dieses vorteilhafte Resultat wird bei gleichzeitig vergleichsweise geringem Arbeitsaufwand für den Kundenberater erzielt, zumal die Generierung der Anzeigenprototypen anhand der zentral hinterlegten Kundendaten automatisch erfolgt. Infolge der automatischen Übermittlung der zentral hinterlegten Kundendaten an das mobile Präsentationssystem und des somit automatisierten Datenabgleichs zwischen dem Kundenberater und der Verlagshaus ist weiterhin eine besonders hohe Sicherheit im Hinblick auf die Eintragung fehlerhafter Daten gewährieistet.

In bevorzugter Ausführung umfasst jede Eintragsvorlage eine Anzahl zugeordneter Eintragsfelder, denen im Zuge der Erstellung der Eintragsprototypen Werte zugeordnet werden. Als Eintragsfeld wird eine einer bestimmten Kundeninformation zugeordnete Variable bezeichnet, die einen Bestandteil der in dem Eintrag enthaltenen Information bildet, insbesondere Name, Adresse, Telefonnummer etc. des Kunden. Ein Eingabefeld kann hierbei auch zur Aufnahme von Bilddaten, insbesondere eines Logos des Kunden o.dgl. vorgesehen sein.

Es werden hierbei notwendige Eintragsfelder und optionale Eintragsfelder unterschieden. Notwendige Eintragsfelder, von denen jede Eintragsvoriage mindestens eines umfasst, sind dieser Eintragsvorlage zwingend zugeordnet. Bei den einer Eintragsvorlage zugeordneten notwendigen Eintragsfeldern handelt es sich beispielsweise um ein Namensfeld und ein Telefonnummernfeld. Es ist daneben zweckmäßigerweise vorgesehen, dass mindestens einer Eintragsvorlage zusätzlich ein oder mehrere optionale Eintragsfelder zugeordnet sind, die nach Kundenwunsch aktiviert oder deaktiviert, d. h, in den Eintragsprototyp ein- bzw. ausgeblendet werden. Hierbei handelt es sich beispielsweise um Information zu Adressdaten, Öffnungszeiten, Branchenangaben, frei konfigurierbaren Textzeilen o.dgl.

Im Zuge der Generierung der Eintragsprototypen werden die Eintragsfelder der zugrundeliegenden Eintragsvorlage vorrangig mit einem entsprechenden kundenspezifischen Wert belegt, der durch den Kundendatensatz bestimmt ist. Ist ein Eintragsfeld jedoch nicht aus den vorhandenen Kundendaten auszufüllen, so wird in vorteilhafter Ausgestaltung der Erfindung dieses Eintragsfeld mit einem hinterlegten Standardwert belegt. Um dennoch eine möglichst große inhaltliche Nähe der Eintragsprototypen zu dem endgültigen Eintrag zu gewährleisten, wird der Standardwert bevorzugt - sofern dies sinnvoll ist - nach Maßgabe einer aus dem Kundendatensatz bezogenen Branchenangabe branchenspezifisch ausgewählt. Insbesondere ist vorgesehen, dass für den Fall, dass ein kundenspezifisches Logo nicht verfügbar ist, ein branchenspezifisches Logo als Standardwert herangezogen wird. Nur wenn auch ein branchenspezifischer Standardwert nicht verfügbar ist, wird bevorzugt ein unspezifischer Standardwert herangezogen.

In einer besonders vorteilhaften Ausgestaltung der Erfindung ist jeder Eintragsprototyp im Vorfeld der Auswahl, d.h. vor der durch den Kunden zu treffenden Kaufentscheidung auf dem Präsentationssystem editierbar. Dem Kunden ist hierdurch die Möglichkeit gegeben, fehlerhafte oder fehlende Werte zu korrigieren bzw. zu ergänzen. Insbesondere ist optional die Möglichkeit vorgesehen, dass ein Kundenlogo anstelle eines Standardlogos direkt in das Präsentationssystem einspielbar ist, und somit ein entsprechender Eintragsprototyp direkt vor den Augen des Kunden anpassbar ist. Ebenso ist hierbei vorgesehen, dass optionale Eingabefelder reversibel ein- bzw. ausgeblendet werden können. Das Präsentationssystem ist dabei derart ausgebildet, dass die gegebenenfalls von der Anzahl und/oder Art der aktivierten optionalen Eintragsfelder abhängige Preisangabe automatisch angepasst wird.

Zweckmäßigerweise ist weiterhin vorgesehen, dass der zur Erstellung der Eintragsprototypen verwendete Kundendatensatz nach erfolgter Modifikation der Eintragsprototypen entsprechend aktualisiert wird. Fügt beispielsweise der Kunde die bislang noch nicht in der Stammdatenbank hinterlegten Öffnungszeiten seiner Niederlassung in die Eintragsprototypen ein, so werden diese Öffnungszeiten automatisch in einen aktualisierten Kundendatensatz übemommen. Dieser wird im Zuge einer Datenangleichung an die Stammdatenbank zurückgemeldet.

In einer weiteren Ausgestaltung der Erfindung ist vorgesehen, dass durch das Auswahlmodul zusätzlich zu den Eintragsprototypen eine Anzahl von Suchbegriffen angeboten wird. Bei einem solchen Suchbegriff (oder Key-Word) handelt es sich insbesondere um so genannte Meta-Informationen, die kein sichtbarer Eintragsbestandteil ist, sondern dem Eintrag im Rahmen eines elektronischen Verzeichnisses als unsichtbare Suchinformation zugeordnet ist. Zur Vereinfachung der Beratung und damit auch zur Erzielung eines höheren Kundenkomforts ist zweckmäßigerweise vorgesehen, dass die durch das Auswahlmodul angezeigten Suchbegriffe wiederum nach Maßgabe einer in dem Kundendatensatz enthaltenen Brancheninformation aus einem Begriffsspeicher branchenspezifisch ausgewählt sind.

Zweckmäßigerweise sind Kopien der Eintragsvorfagen, Standardwerte sowie der zur Verfügung gestellten Suchbegriffe lokal auf dem Präsentationssystem hinterlegt, wobei zweckmäßigerweise diese Kopien in regelmäßigen Abständen aus einem zentralen Vorlagenspeicher aktualisiert werden, so dass bei einer Änderung des Eintrags-Layouts, einer Kostenanpassung o.dgl. seitens des Verlagshauses auch das mobilen Präsentationssystem automatisch auf aktuellen Stand gebracht wird.

Nachfolgend wird ein Ausführungsbeispiel der Erfindung anhand einer Zeichnung näher erläutert. Darin zeigen:
- Fig. 1: in einem schematischen Blockschaltbild eine Einrichtung zur kundenspezifischen Erstellung von Einträgen in einem Telefonbuch mit einem zentralen Datenverwaltungssystem und einem mobilen Präsentationssystem,
- Fig. 2: schematisch skizziert fünf in der Einrichtung gemäß Fig. 1 hinterlegte Eintragsvorlagen und
- Fig. 3: schematisch eine Benutzeroberfläche des Präsentationssystems gemäß Fig. 1 mit einem zur Auswahl angezeigten, anhand einer Eintragsvorlage gemäß Fig. 2 erstellten Eintragsprototyp.

Einander entsprechende Teile und Größen sind in allen Figuren stets mit den gleichen Bezugszeichen versehen.

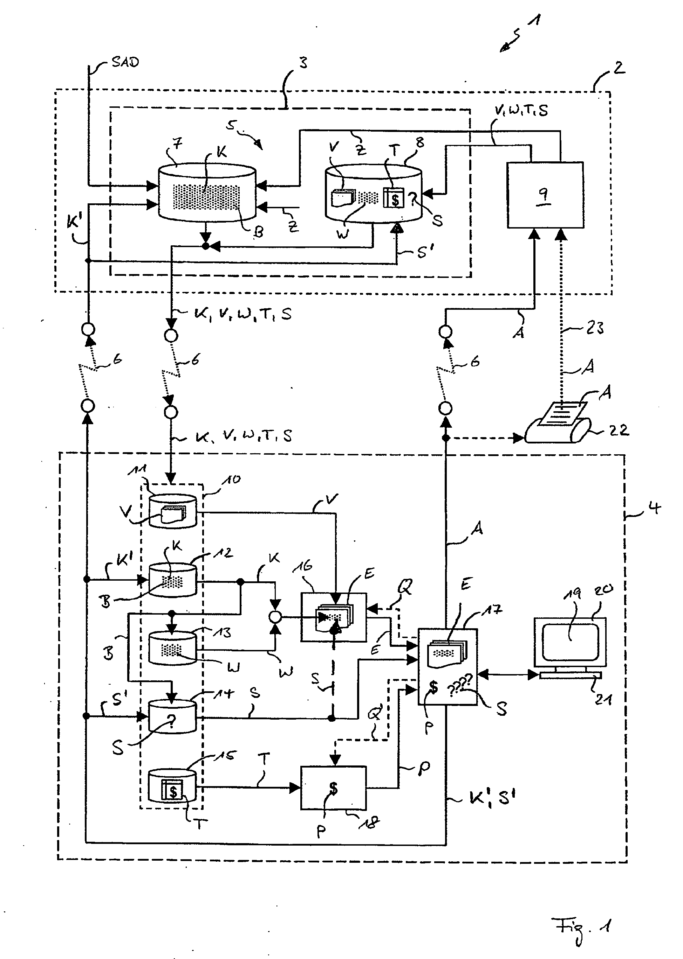

In Fig. 1 ist eine Einrichtung 1 zur Erstellung von Einträgen in einem Telefonbuch dargestellt. Die Einrichtung 1 umfasst ein einem angedeuteten Vedagshaus 2 zugeordnetes zentrales Datenverwaltungssystem 3. Die Einrichtung 1 umfasst weiterhin eine Vielzahl von jeweils einem Medienberater zugeordneten mobilen Präsentationssystemen 4, von denen exemplarisch eines in Fig. 1 dargestellt ist.

Das zentrale Datenverwaltungssystem 3 umfasst eine Rechenanlage 5 mit ein oder mehreren Datenservem. Das Präsentationssystem 4 ist als mobiler Rechner, insbesondere als Notebook oder Tablet-PC ausgebildet. Das Datenverwaltungssystem 3 und jedes Präsentationssystem 4 sind über ein ständiges oder temporäres Datenübermittlungssystem 6, insbesondere eine drahtgebundene oder drahtlose Telekommunikationsverbindung, Intemetverbindung o. dgl. verbunden.

Das Datenverwaltungssystem 3 umfasst eine Stammdatenbänk 7, in der eine Vielzahl von Kundendatensätzen K hinterlegt sind. Jeder Kundendatensatz K ist hierbei einem gewerblichen Teilnehmer eines Telekommunikationsnetzes zugeordnet. In einem jeden Kundendatensatz K ist verschiedenartige Information bezüglich des zugehörigen (nachfolgend als Kunden bezeichneten) Netzteilnehmers gespeichert, insbesondere Namen, Adresse, Telefonnummer sowie eine einem jeden Kunden zugeordnete Branchenbezeichnung B. Der Kundendatensatz enthält gegebenenfalls weitere Informationen wie Öffnungszeiten eines Ladengeschäftes, E-Mail- oder Internetadresse, Bilddaten eines Kundenlogos oder sonstige kundenspezifische Informationen. Ein Grundbestand der in jedem Kundendatensatz K enthaltenen Information wird der Stammdatenbank 7 durch eine Telekommunikationsgesellschaft mittels so genannter Standard-Antragsdaten SAD zugeführt. Diese Standard-Antragsdaten SAD enthalten insbesondere Namen, Rufnummer, Branchen- bzw. Berufsbezeichnung sowie eine Adressangabe der Netzteilnehmer. Die Standard-Antragsdaten SAD werden seitens des Verlagshauses 2 durch Zusatzdaten Z angereichert, die im Zuge laufender Geschäftsbeziehungen, aus eigenen Recherchen oder sonstigen Datenquellen über einen spezifischen Kunden gewonnen wurden.

Das zentrale Datenverwaltungssystem 3 umfasst weiterhin einen Vorlagenserver 8. In dem Vorlagenserver 8 ist insbesondere eine Anzahl von Eintragsvorlagen V für Telefonbucheinträge hinterlegt. Ferner enthält der Vorlagenserver 8 eine Liste mit (nachfolgend näher spezifizierten) Standardwerten W, eine Kostentabelle T sowie eine Liste mit Suchbegriffen (oder Key-Words) S. Die Eintragsvorlagen V, Standardwerte W, die Kostentabelle T und die Suchbegriffe S werden durch eine Verlagszentrale 9 in den Vorlagenserver 8 eingepflegt und bei Bedarf aktualisiert. Insbesondere sind die Suchbegriffe S branchenspezifisch, d.h. nach Branchen geordnet, in dem Vorlagenserver 8 hinterlegt. Branchenrelevante Suchbegriffe S werden beispielsweise durch Intemetrecherche, statistische Auswertung der Anfragen an Online-Verzeichnisse und Suchmaschinen, statistische Erhebung über häufig verwendete Suchbegriffe in bestehenden Aufträgen, Kundenbefragungen o.dgl. ermittelt.

Das Präsentationssystem 4 umfasst ein Speichermodul 10, insbesondere eine Festplatte. Das Speichermodul 10 ist gemäß Fig. 1 zur Verdeutlichung funktional aufgegliedert in einen Vorlagenspeicher 11 zur lokalen Speicherung von Kopien der Eintragsvorlagen V, einen Kundendatenspeicher 12 zur lokalen Speicherung einer Anzahl von Kundendatensätzen K, einem Wertespeicher 13 zur lokalen Speicherung von Kopien der Standardwerte W, einem Begriffsspeicher 14 zur lokalen Speicherung von Kopien der Suchbegriffe S sowie einen Kostenspeicher 15 zur Speicherung einer Kopie der Kostentabelle T.

Das Präsentationssystem 4 umfasst einen Eintragsgenerator 16, der dazu ausgebildet ist, anhand einer jeden hinterlegten Eintragsvorlage V unter Berücksichtigung der in einem Kundendatensatz K enthaltenen Information sowie hilfsweise hinterlegten Standardwerten W einen zugehörigen Eintragsprototyp E automatisch zu generieren. Der Anzeigengenerator 16 greift hierbei optional auch auf den Begriffspeicher 14 zurück, z.B. um bei Bedarf aus den hinterlegten Suchbegriffen S Vorschläge für Geschäftsbezeichnungen oder Hinweise auf Waren bzw. Dienstleistungen nach branchenspezifischen Kriterien automatisch abzuleiten und in den Anzeigenprototyp E zu integrieren. Das Präsentationssystem 4 umfasst weiterhin ein Auswahlmodul 17, das dazu ausgebildet ist, die durch den Eintragsgenerator 16 im Hinblick auf den zugrunde gelegten Kundendatensatz K vorkonfigurierten Eintragsprototypen E dem zugehörigen Kunden für eine Auswahl anzuzeigen. Das Auswahlmodul 17 wirkt auf den Eintragsgenerator 16 zurück, um diesen im Bedarfsfall durch eine entsprechende Anfrage Q zu einer kundenspezifischen Editierung eines oder mehrerer Eintragsprototypen E zu veranlassen. Der Eintragsgenerator 16 und die Module 17 und 18 sind bevorzugt durch Software-Module realisiert.

Die im Zusammenhang mit einer Kaufentscheidung des Kunden erfolgende Auswahl ist nach Art eines elektronischen Warenkorb-Prinzips strukturiert. Das Auswahlmodul 17 ist hierbei mit einem Preisberechnungsmodul 18 verbunden, das auf eine Anfrage Q' hin im Hinblick auf ein von dem Auswahlmodul 17 angezeigtes Angebot unter Rückgriff auf die hinterlegte Kostentabelle T eine zugehörige Preisangabe P berechnet und dem Auswahimodul 17 zuführt.

Das von dem Auswahlmodul 17 angezeigte Angebot umfasst zusätzlich zu einem zur Auswahl stehenden Eintragsprototyp E optional einen oder mehrere zugeordnete Suchbegriffe S, die dem Auswahimodul 17 aus dem Begriffspeicher 14 zugeführt werden. Zur Anzeige und gegebenenfalls Modifizierung des Angebots sowie zur Tätigung einer Auswahl umfasst das Präsentationssystem 4 eine graphische Benutzeroberfläche 19, die mit Mitteln zur Dateneingabe und -ausgabe, insbesondere Bildschirm 20, Tastatur 21, Maus, Touchpad, etc. des Präsentationssystems 4 korrespondiert.

Das Auswahimodul 17 ist dahingehend ausgebildet, bei Auswahl eines Eintragsprototyps E sowie gegebenenfalls zusätzlicher Suchbegriffe S einen Auftrag A zu erzeugen. Der Auftrag A wird nach Bestätigung durch den Kunden von dem Präsentationssystem 4 an die Verlagszentrale 9 übermittelt, die einen dem Auftrag A entsprechenden Telefonbucheintrag realisiert. Bei dem Auftrag A handelt es sich bevorzugt um ein elektronisches Dokument. Als Mittel zur kundenseitigen Bestätigung ist bevorzugt die Abgabe einer elektronischen Unterschrift vorgesehen. Äquivalenterweise kann der Auftrag A aber auch über einen Drucker 22 als Papierdokument ausgegeben werden, das nach Unterzeichnung durch den Kunden auf dem Postweg 23 oder in ähnlicher Form an die Verlagszentrale 9 übermittelt wird.

Im Zuge der Erstellung eines Telefonbucheintrags wird in einem ersten Schritt der einem vorbestimmten Kunden entsprechende Kundendatensatz K von der Stammdatenbank 7 auf den Kundendatenspeicher 12 des Präsentationssystems 4 übermittelt. Zumal die Vermittlung von gewerblichem Telefonbucheinträgen in der Praxis häufig durch im Außendienst tätige Medienberater mit fester räumlicher Zuständigkeit vorgenommen wird, sind die auf das einem bestimmten Medienberater zugeordnete Präsentationssystem 4 übermittelten Kundendatensätze K insbesondere nach geografischen Kriterien ausgewählt. Ferner werden optional die auf dem Präsentationssystem 4 hinterlegten Kopien der Eintragsvorlagen V Standardwerte W, Suchbegriffe S und die Kostentabelle T durch die entsprechenden Originaldaten des Vorlagenservers 8 aktualisiert. Diese Aktualisierung wird regelmäßig, d. h. in gleichmäßigen Zeitabständen oder immer dann, wenn sich die entsprechenden Daten auf dem Vorlagenserver 8 geändert haben, vorgenommen.

Im Zuge eines Kundenbesuchs durch den Medienberater werden nun durch den Eintragsgenerator 16 anhand des diesem Kunden zugeordneten Kundendatensatzes K und den hinterlegten Eintragsvorlagen V die jeweils zugehörigen Eintragsprototypen E automatisch erzeugt.

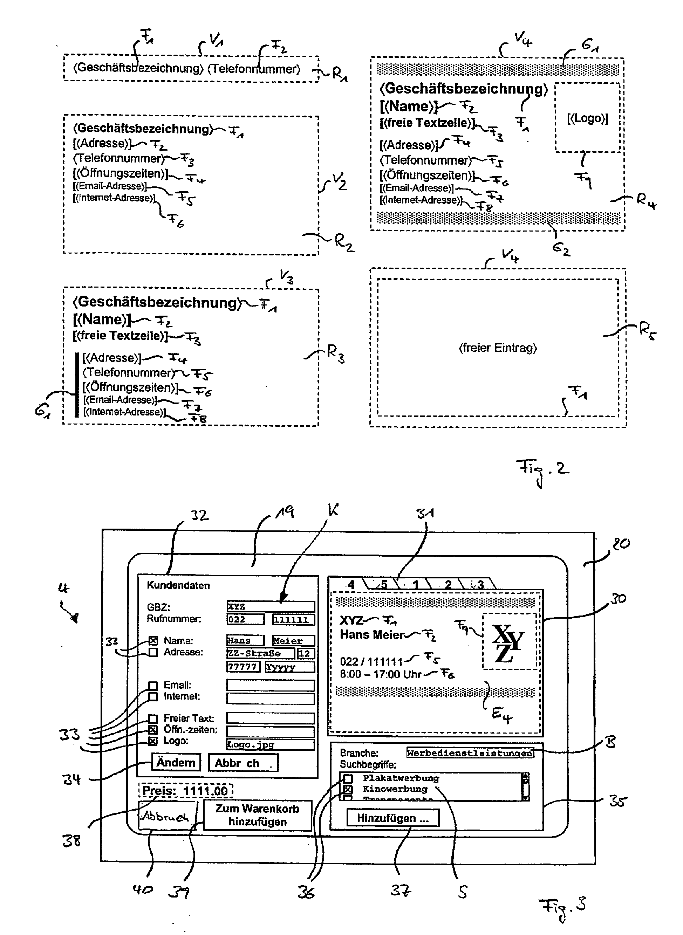

Gemäß Fig. 2 sind in dem Vorlagenspeicher 11 exemplarisch fünf Einfragsvorlagen Vₙ (n = 1,2,...,5) hinterlegt, die einem Kunden in unterschiedlichem Maße die Möglichkeit zu einer werbewirksamen Darstellung des Eintrags in dem Telefonbuch einräumen. Jede Eintragsvorlage Vᵢ weist eine Anzahl von zugeordneten Eintragsfeldern Fₘ (m = 1,2,...) auf. Die der jeweiligen Eintragsvorlage Vₙ zugeordneten Eintragsfelder Fₘ stellen Variablen dar, deren jede einer spezifischen Information des Kundendatensatzes K entspricht. Beispielsweise steht das Eintragsfeld F₁ der Eintragsvorlage V₁ als Variable für die Geschäftsbezeichnung des Kunden, das Eintragsfeld F₂ als Variable für die Telefonnummer (oder Rufnummer) des Kunden. In Fig. 2 sind notwendige Eintragsfelder Fₘ, die im Kontext der jeweiligen Eintragsvorlage Vₙ zwingend erscheinen, und von denen eine jede Eintragsvorlage Vₙ mindestens eines umfasst, in spitzen Klammern (z.B. (Geschäftsbezeichnung)) dargestellt. Optionale Eintragsfelder Fₘ, die je nach Wunsch des Kunden ein- oder ausgeblendet werden können, sind zusätzlich in eckigen Klammem dargestellt, z.B. [(Adresse)]. Jeder Eintragsvorlage Vₙ sind zusätzlich (darstellungstechnisch lediglich angedeutete) Formatvorschriften Rₙ (n = 1,2, ...,5) zugewiesen, welche das Darstellungsformat sowie die Anordnung der Eintragsfelder Fₘ, die Form und Anordnung gegebenenfalls vorhandener Grafikelemente Gₘ (m = 1,2,...) etc. spezifizieren.

Zu jeder Eintragsvorlage Vₙ wird ein entsprechender Eintragsprototyp Eₙ (n = 1,2, ...,5) generiert, indem jedem Eintragsfeld Fₘ der jeweiligen Eintragsvorlage Vₙ - sofern möglich - ein Wert aus dem Kundendatensatz K zugewiesen wird. Das Eingabefeld F₁ der Eintragsvorlage V₁ wird also mit der in dem Kundendatensatz K enthaltenen Geschäftsbezeichnung des Kunden belegt, etc. Für optionale Eintragsfelder Fₘ gilt dies nur insofern, als sie als "aktiviert" markiert sind, d.h. entsprechend eines zugewiesenen Aktivierungszustandes eingeblendet werden sollen.

Ist zu einem Eingabefeld Fₘ aus dem Kundendatensatz K kein korrespondierender Wert ermittelbar, so belegt der Eintragsgenerator 16 dieses Eingabefeld Fₘ stattdessen mit einem aus dem Standardspeicher 13 entnommenen Standardwert W. Beispielsweise wird das Eingabefeld F₈ der Eintragsvorlage V₃- sofern die Intemet-Adresse des Kunden nicht in dem Kundendatensatz hinterlegt ist, mit dem Standardwert "www.XXX.XX" belegt.

Diese Ersetzung der kundenspezifischen Information durch Standardwerte W erfolgt ― sofern sinnvoll - differenziert, indem dem entsprechenden Eingabefeld Fₘ vorrangig ein branchenspezifischer Standardwert W zugewiesen wird, der in Abhängigkeit der in dem Kundendatensatz K enthaltenen Branchenangabe B aus dem Wertespeicher 13 ausgewählt wird. Erst wenn kein branchenspezifischer Standardwert W ermittelbar ist, wird auf einen unspezifischen Standardwert W zurückgegriffen. Dieses differenzierte Verfahren wird insbesondere auf das einem Kundenlogo zugeordnete Eingabefeld F₉ der Eintragsvorlage V₄ angewendet. Optional ist vorgesehen, auch das eine frei konfigurierbare Textzeile enthaltende Eintragsfeld F₃ der Eintragsvorlagen V₃ und V₄ vorrangig mit einer branchenspezifischen Information zu belegen, sofern der Wert dieses Eintragsfelds F₃ nicht aus dem Kundendatensatz K bestimmt ist. Insbesondere greift der Eintragsgenerator 16 hierzu auf den Begriffsspeicher 14 zurück, um in Abhängigkeit der Branchenangabe B mit Hilfe der hinterlegten Suchbegriffe S Vorschläge für Geschäftsbezeichnungen oder Hinweise auf Waren bzw. Dienstleistungen zu generieren und automatisch zu integrieren.

Die auf diese Weise erzeugten Eintragsprototypen Eₙ werden über den Bildschirm 20 in einem Anzeigefeld 30 der in Fig. 3 schematisch vereinfacht dargestellten Benutzeroberfläche 19 angezeigt. In der Darstellung gemäß Fig. 3 zeigt das Eingabefeld 30 den Eintragsprototyp E₄. Die übrigen Eintragsprototypen E₁,E₂,E₃ und E₅ können über eine dem Anzeigefeld 30 zugeordnete Auswahlleiste 31 angefordert werden.

Die Benutzeroberfläche 19 umfasst gemäß Fig. 3 des Weiteren ein Eingabefeld 32, in welchem die den Eintragsfeldern Fₘ entsprechenden Werte des Kundendatensatzes K angezeigt werden. Jedem optionalen Eintragsfeld Fₘ ist hierbei ein Ankreuzfeld 33 (auch als Check-Box bezeichnet) zugeordnet, das den Aktivierungszustand des Eintragsfeldes Fₘ anzeigt. In dem Beispiel gemäß Fig. 3 sind die optionalen Eintragsfelder F₂ (Name), F₆ (Öffnungszeiten) und F₉ (Logo) als aktiviert markiert. Die Eintragsfelder F₂,F₆ und F₉ sind daher auch im Rahmen des angezeigten Eintragsprototyps E₄ eingeblendet. Die als deaktiviert markierten Eintragsfelder F₃ (Freie Textzeile), F₄ (Adresse), F₇ (Email-Adresse) und F₈ (Internet-Adresse) der Eintragsvorlage V₄ sind dagegen nicht in dem Eintragsprototyp E₄ enthalten. Der beispielhaft dargestellte Eintragsprototyp E₄ enthält insbesondere ein kundespezifisches Logo, das in Form einer Graphikdatei "Iogo.jpg" in dem Kundendatensatz K enthalten ist. Das aus dem Kundendatensatz K nicht bestimmte Eintragsfeld F₆ (Öffnungszeiten) ist mit dem Standardwert W "8:00 - 17:00 Uhr" belegt.

Die innerhalb des Eingabefelds 32 angezeigten Kundendaten können durch den Medienberater editiert werden. Insbesondere können fehlende oder fehlerhafte Werte ergänzt bzw. korrigiert werden. Außerdem können optionale Eintragsfelder Fₘ durch Betätigung des zugehörigen Ankreuzfeldes 33 reversibel aktiviert oder deaktiviert werden. Jede innerhalb des Eingabefelds 32 vorgenommene und durch Betätigung einer Schaltfläche 34 ("Ändern") bestätigte Änderung löst eine Anfrage Q des Auswahimoduls 17 an den Eintragsgenerator 16 aus, der die Eintragsprototypen Eₙ entsprechend modifiziert. Jede in dem Eingabefeld 32 vorgenommene Änderung der Kundendaten wird somit unmittelbar in den in dem Anzeigefeld 30 angezeigten Eintragsprototyp Eₙ übernommen.

In einem weiteren Eingabefeld 35 der Benutzeroberfläche 19 werden eine Anzahl von Suchbegriffen S angezeigt, die nach Maßgabe der in dem Kundendatensatz K enthaltenen Branchenangabe B aus dem Begriffsspeicher 14 vorausgewählt sind. Jedem Suchbegriff S ist wiederum ein Ankreuzfeld 36 zugeordnet, durch dessen Betätigung der Suchbegriff S aktiviert werden kann. Im Beispiel gemäß Fig. 3 sind zu der Branchenangabe B "Werbedienstleistungen" die branchenspezifischen Suchbegriffe S "Plakatwerbung", "Kinowerbung", "Transparente", ... vorausgewählt, von denen wiederum nur der Suchbegriff S "Kinowerbung" aktiviert ist.

Durch Betätigung einer Schaltfläche 37 ("Hinzufügen...") können weitere kundenspezifische Suchbegriffe S in die in dem Eingabefeld 35 angezeigte Liste aufgenommen werden.

Gleichzeitig mit der Anzeige der Eintragsprototypen Eₙ und der Suchbegriffe S, wird durch das Preisberechnungsmodul 18 auf Anfrage Q' durch das Auswahlmodul 17 unter Berücksichtigung des angezeigten Eintragsprototyps Eₙ, des Aktivierungszustands der optionalen Eintragsfelder Fₘ und der aktivierten Suchbegriffe S die Preisangabe P berechnet und in einem weiteren Anzeigefeld 38 der Benutzeroberfläche 19 angezeigt. Die Preisangabe P wird hierbei bei jeder Änderung hinsichtlich des angezeigten Eintragsprototyps Eₙ, der aktivierten Eintragsfelder Fₘ oder der aktivierten Suchbegriffe S automatisch aktualisiert.

Die eigentliche Auswahl wird durch Betätigung einer weiteren Schaltfläche 39 ("Zum Warenkorb hinzufügen") getroffen und bezieht sich auf das angezeigte Angebot, d.h. den angezeigten Eintragsprototyp Eₙ sowie die gegebenenfalls aktivierten Suchbegriffe S. Wird die Schaltfläche 39 betätigt, so erzeugt das Auswahlmodul 17 automatisch den Auftrag A, der nach Bestätigung durch den Kunden der Vertagszentrale 9 zugeleitet wird.

Durch Betätigung einer Schaltfläche 40 wird das Angebot alternativ abgelehnt. In diesem Fall unterbleibt die Erstellung des Angebots A.

Unabhängig von der Annahme oder Ablehnung des Angebots wird abschließend von dem Präsentationssystem 4, falls die Kundendaten seitens des Kunden geändert wurden, ein diesen Änderungen entsprechend aktualisierter Kundendatensatz K' an den lokalen Kundendatenspeicher 12 und an die zentrale Stammdatenbank 7 zurückgeführt. Ebenso werden gegebenenfalls kundenspezifisch hinzugefügte Suchbegriffe S' in den lokalen Begriffspeicher 14 und den zentralen Vorlagenserver 8 zurückgeführt.

Bezugszeichenliste
- 1: Einrichtung
- 2: Verlagshaus
- 3: Datenverwaltungssystem
- 4: Präsentationssystem
- 5: Rechenanlage
- 6: Datenübermittlungssystem
- 7: Stammdatenbank
- 8: Vorlagenserver
- 9: Verlagszentrale
- 10: Speichermodul
- 11: Vorfagenspeicher
- 12: Kundendatenspeicher
- 13: Wertespeicher
- 14: Begriffsspeicher
- 15: Kostenspeicher
- 16: Eintragsgenerator
- 17: Auswahlmodul
- 18: Preisberechnungsmodul
- 19: Benutzeroberfläche
- 20: Bildschirm
- 21: Tastatur
- 22: Drucker
- 23: Postweg
- 30: Anzeigefeld
- 31: Auswahlleiste
- 32: Eingabefeld
- 33: Ankreuzfeld
- 34: Schaltfläche
- 35: Eingabefeld
- 36: Ankreuzfeld

- 37: Schaltfläche
- 38: Anzeigefeld
- 39: Schalifläche
- 40: Schaltfläche

- A: Auftrag
- B: Branchenbezeichnung
- E,Eₙ: Eintragsprototyp (n = 1,2,...,5)
- Fₘ: Eintragsfeld (m = 1,2,...)
- Gₘ: Graphikelemenet (m = 1,2,...)
- K,K': Kundendatensatz
- P: Preisangabe
- Rₘ: Formatvorschrift (m = 1,2,...)
- Q,Q': Anfrage
- S,S': Suchbegriff
- SAD: Standardantragsdaten
- T: Kostentabelle
- V,Vₙ: Eintragsvorlage (n = 1,2,...,5)
- W: Standardwert
- Z: Zusatzdaten

## Patentansprüche

1. Verfahren zur kundenspezifischen Erstellung von Einträgen in einem Telefonbuch o.dgl.,
- bei welchem mindestens ein Kundendatensatz (K) von einer zentralen Stammdatenbank (7) auf ein mobiles Präsentationssystem (4) übertragen wird,
- bei welchem unter Berücksichtigung des Kundendatensatzes (K) anhand von hinterlegten Eintragsvorlagen (V,Vₙ; n = 1,2,...) eine Anzahl von vorkonfigurierten Eintragsprototypen (E,Eₙ) erzeugt und auf dem Präsentationssystem (4) zur Auswahl angezeigt werden, und
- bei welchem durch das Präsentationssystem (4) bei Auswahl eines Eintragsprototyps (E,Eₙ) ein entsprechender Auftrag (A) zur Realisierung des Eintrags in dem Telefonbuch o.dgl. erzeugt wird.

2. Verfahren nach Anspruch 1,
**dadurch gekennzeichnet,**
**dass** jede Eintragsvoriage (V,Vₙ) eine Anzahl zugeordneter Eintragsfelder (Fₘ; m =1,2,...) sowie Formatvorschriften (Rₘ) für deren Anzeige umfasst, wobei jeder Eintragsvorlage (V,Vₙ) mindestens ein notwendiges Eintragsfeld (Fₘ) sowie mindestens einer Eintragsvorlage (V,Vₙ) zusätzlich mindestens ein optionales Eintragsfeld (Fₘ) zugeordnet ist.

3. Verfahren nach Anspruch 2,
**dadurch gekennzeichnet,**
**dass** bei der Erstellung eines Eintragsprototyps (E,Eₙ) der einem Eintragsfeld (Fₘ) zugeordnete Wert, sofern er nicht durch den Kundendatensatz (K) bestimmt ist, mit einem Standardwert (W) belegt wird.

4. Verfahren nach Anspruch 3,
**dadurch gekennzeichnet,**
**dass** der Standardwert (W) nach Maßgabe einer in dem Kundendatensatz (K) enthaltenen Branchenangabe (B) aus einem Wertespeicher (13) branchenspezifisch ausgewählt wird.

5. Verfahren nach einem der Ansprüche 2 bis 4,
**dadurch gekennzeichnet,**
**dass** jeder Eintragsprototyp (E,Eₙ) in Hinblick auf den einem Eintragsfeld (Fₘ) zugeordneten Wert sowie in Hinblick auf einen Aktivierungszustand eines optionalen Datenfeldes (Fₘ) editierbar ist.

6. Verfahren nach Anspruch 5,
**dadurch gekennzeichnet,**
**dass** anhand des editierten Eintragsprototyps (E,Eₙ) der Kundendatensatz (K) automatisch aktualisiert wird, und dass ein aktualisierter Kundendatensatz (K') an die Stammdatenbank (7) zurückgemeldet wird.

7. Verfahren nach einem der Ansprüche 1 bis 6,
**dadurch gekennzeichnet,**
**dass** zu jedem Eintragsprototyp (E,Eₙ) anhand einer hinterlegten Kostentabelle (T) eine Preisangabe (P) berechnet und durch das Präsentationssystem (4) angezeigt wird.

8. Verfahren nach einem der Ansprüche 1 bis 7,
**dadurch gekennzeichnet,**
**dass** auf dem Präsentationssystem (4) eine Anzahl von Suchbegriffen (S) zur zusätzlichen Auswahl angezeigt werden, wobei die angezeigten Suchbegriffe (S) nach Maßgabe einer in dem Kundendatensatz (K) enthaltenen Branchenangabe (B) aus einem Begriffsspeicher (14) branchenspezifisch vorausgewählt werden.

9. Verfahren nach einem der Ansprüche 1 bis 8,
**dadurch gekennzeichnet,**
**dass** eine Kopie einer jeden Eintragsvorlage (V,Vₙ) zur Erzeugung des jeweiligen Eintragsprototyps (E,Eₙ) lokal in dem Präsentationssystem (4) hinterlegt ist, wobei diese oder jede Kopie regelmäßig aus einem zentralen Vorlagenspeicher (8) aktualisiert wird.

10. Verfahren nach einem der Ansprüche 3 bis 9,
**dadurch gekennzeichnet,**
**dass** Kopien der Standardwerte (W) lokal in dem Präsentationssystem (4) hinterlegt sind, wobei diese Kopien regelmäßig aus einem zentralen Vorlagenspeicher (8) aktualisiert werden.

11. Verfahren nach einem der Ansprüche 8 bis 10,
**dadurch gekennzeichnet,**
**dass** Kopien der Suchbegriffe (S) lokal in dem Präsentationssystem (4) hinterlegt sind, wobei diese Kopien regelmäßig aus einem zentralen Vorlagenspeicher (8) aktualisiert werden.

12. Einrichtung (1) zur kundenspezifischen Erstellung von Einträgen in einem Telefonbuch o.dgl.
- mit einer einem zentralen Datenverwaltungssystem (3) zugeordneten Stammdatenbank (7), auf der eine Anzahl von Kundendatensätzen (K) hinterlegt sind,
- mit einem Datenübermittlungssystem (6) zur Übertragung mindestens eines Kundendatensatzes (K) von der Stammdatenbank (7) auf ein mobiles Präsentationssystem (4),
- mit einem Eintragsgenerator (16), der dazu ausgebildet ist, unter Berücksichtigung des übertragenen oder zu übertragenden Kundendatensatzes (K) anhand von hinterlegten Eintragsvorlagen (V,Vₙ) eine Anzahl von vorkonfigurierten Eintragsprototypen (E,Eₙ) zu erzeugen, und
- mit einem dem Präsentationssystem (4) zugeordneten Auswahlmodul (17), das dazu ausgebildet ist, die vorkonfigurierten Eintragsprototypen (E,Eₙ) für eine Auswahl anzuzeigen und bei Auswahl eines Eintragsprototyps (E,Eₙ) durch das Präsentationssystem (4) einen entsprechenden Auftrag (A) zur Realisierung des Eintrags in dem Telefonbuch o.dgl. zu erzeugen.

13. Einrichtung (1) nach Anspruch 12,
**dadurch gekennzeichnet,**
**dass** der Eintragsgenerator (16) dazu ausgebildet ist, ein einer Eintragsvorlage (V,Vₙ) zugeordnetes Eintragsfeld (Fₘ) mit einem kundenspezifischen Wert zu belegen, sofern ein solcher aus dem Kundendatensatz (K) bestimmt ist, und ansonsten dem Eingabefeld (Fₘ) einen Standardwert (W) zuzuordnen.

14. Einrichtung (1) nach Anspruch 12 oder 13,
**dadurch gekennzeichnet,**
**dass** das Auswahlmodul (17) dazu ausgebildet ist, eine Anzahl von aus einem Begriffsspeicher (14) zugeführten Suchbegriffe (S) zur zusätzlichen Auswahl anzuzeigen und jeden ausgewählten Suchbegriff (S) in dem Auftrag (A) zu berücksichtigen.

15. Einrichtung (1) nach einem der Ansprüche 12 bis 14,
**gekennzeichnet durch**
ein Preisberechnungsmodul (18), das dazu ausgebildet ist, zu jedem Eintragsprototyp (E,Eₙ) anhand einer hinterlegten Kostentabelle (T) eine Preisangabe (P) zu berechnen.
